# DEMANDE DE BREVET EUROPEEN

(11) **EP 0 703 134 A1**
(43) Date de publication de la demande: **27.03.1996**
(21) Numéro de dépôt: 95440061.0
(22) Date de dépôt: 19.09.1995
(51) Int. Cl.: B61D 47/00, B60S 9/14

(54) **Procédé d'engagement-dégagement d'une structure ferroviaire par rapport à un convoi à partir de la charge qu'elle porte**

(30) Priorité: 23.09.1994 FR 9411553
(71) Demandeur: LOHR INDUSTRIE, F-67980 Hangenbieten (FR)
(72) Inventeur: Lohr, Robert, F-67980 Hangenbieten (FR)
(74) Mandataire: Metz, Paul

(57) **Abrégé**

Procédé d'engagement et de désengagement du convoi d'une structure ferroviaire (24) porteuse d'un chargement, caractérisé en ce que l'on utilise un moyen de soutien et de levage (7) de la charge faisant partie de celle-ci et ceci avec des moyens de liaison mécanique temporaire entre la charge et la structure ferroviaire (24) en tant que moyen général pour les opérations de manoeuvre liées au chargement/déchargement.

Cette invention intéresse les constructeurs de matériel ferroviaire.

## Description

L'invention se situe dans le cadre du transport rail-route et se rapporte à l'incorporation d'une structure ferroviaire porteuse d'une charge routière dans un convoi ferroviaire et sa libération par un mouvement vertical d'une de ses extrémités pour l'engagement ou le désengagement du bogie et le cas échéant l'alignement et le désalignement de la structure porteuse du convoi par pivotement autour de son autre extrémité.

Dans le cadre du transport mixte rail-route et plus généralement du ferroutage, les constructeurs de matériel ferroviaire et les constructeurs de véhicules routiers ont imaginé diverses solutions intéressantes pour le chargement/déchargement rapide des véhicules routiers directement sur les ou des châssis-wagons.

L'une de ces solutions déjà brevetée par le déposant selon FR-A-2.680.492 et FR-A-2.688.179 et FR-A-2.688.180 consiste à utiliser une structure porteuse ferroviaire à plancher bas dont l'une des extrémités est ouverte et conformée en brancard, extrémité par laquelle la structure-wagon est montée désolidarisable du bogie par un mouvement vers le haut.

L'autre extrémité est fermée et montée pivotante sur le bogie ferroviaire. Elle constitue un organe de pivotement assurant la liaison de traction et le mouvement d'alignement ou de désalignement de la structure-wagon en vue de sa présentation en oblique pour les opérations de mise en place et d'enlèvement d'une semi-remorque par la simple utilisation de son tracteur.

La dissociation longitudinale est également prévue selon laquelle la structure-wagon est libérée après désolidarisation du bogie et évacuation de la structure ferroviaire qui est directement adjacente à l'extrémité libérée.

Ce système nécessite cependant, dans ses deux configurations d'utilisation, l'intervention d'un moyen extérieur ou de moyens intégrés à la structure-wagon assurant le levage de l'extrémité en brancard désolidarisable de la traverse d'accouplement portée par le bogie et son soutien pendant les mouvements de désengagement-engagement et le cas échéant de pivotement-dégagement de l'ensemble.

La présente invention a pour but, dans le cadre de l'application au transport rail-route, de procurer une solution techniquement et économiquement optimale pour le transfert d'une charge par exemple un véhicule routier et notamment une semi-remorque sur une structure ferroviaire de façon totalement autonome et pour la manoeuvre d'intégration des structures-wagon dans le convoi ferroviaire.

A cet effet, l'invention se rapporte à un procédé de manoeuvre d'une structure ferroviaire en vue de son incorporation à un convoi ferroviaire et sa libération pour son chargement/déchargement caractérisé en ce que l'on utilise un moyen de soutien et de levage inhérent à la charge en association avec des moyens de liaison mécanique temporaire entre la charge et la structure ferroviaire en tant que moyens actifs pour réaliser les manoeuvres d'intégration ou de libération de la structure ferroviaire du convoi en vue de son chargement/déchargement.

Cette autonomie apporte une simplification importante dans le matériel mis en oeuvre et dans les opérations de chargement/déchargement.

Ainsi, il n'est plus nécessaire de faire intervenir des moyens externes de levage ou de compliquer la réalisation de la structure-wagon en prévoyant des béquilles ou autres moyens de levage intégrés.

Par ailleurs, si dans le cas spécifique d'une application à une semi-remorque porte-véhicules on ne dispose pas de moyens externes pour placer les semi-remorques sur les structures-wagons ou les enlever, il s'avère utile de pouvoir charger ou décharger les véhicules alors que les semi-remorques sont déjà ou encore en place sur la structure-wagon. Cette possibilité prend tout son intérêt sur les aires d'attente disposant d'un branchement ferroviaire chez les constructeurs ou sur les dépôts régionaux ou nationaux.

L'invention confère de nombreux et importants avantages au transport mixte rail-route car les charges qui peuvent être des semi-remorques porte-véhicules ou d'autres véhicules routiers jouent individuellement le rôle de moyen moteur dans les phases de manoeuvres de la structure-wagon dispensant l'exploitant de disposer de moyens spéciaux externes pour effectuer ces manoeuvres.

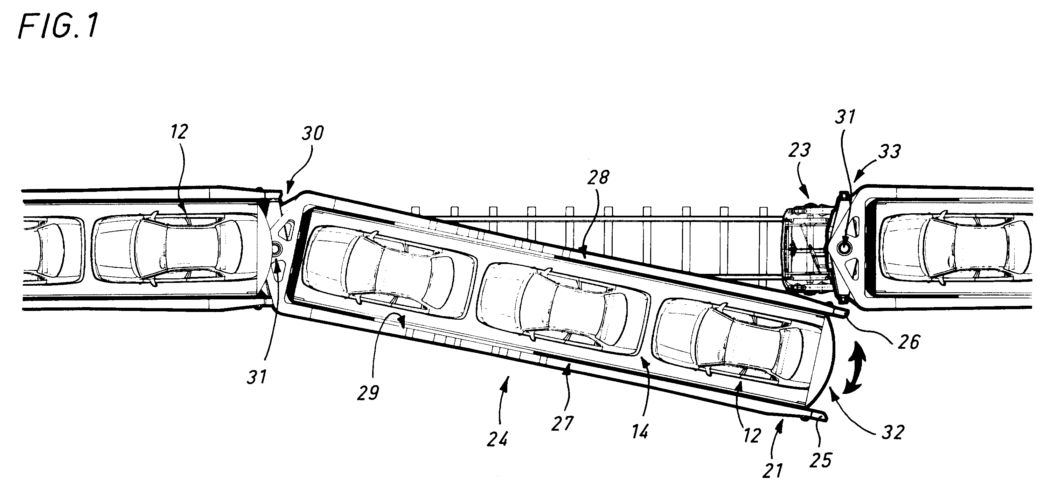

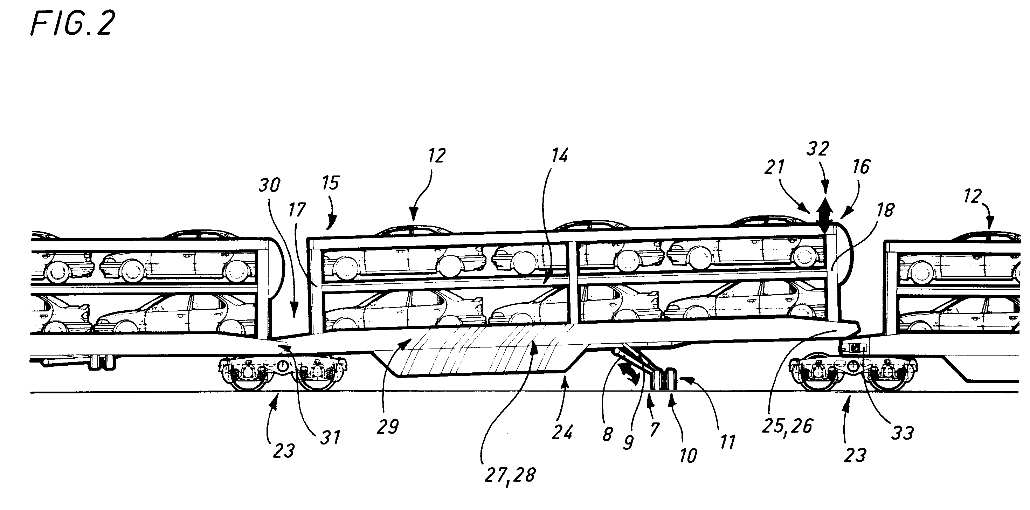

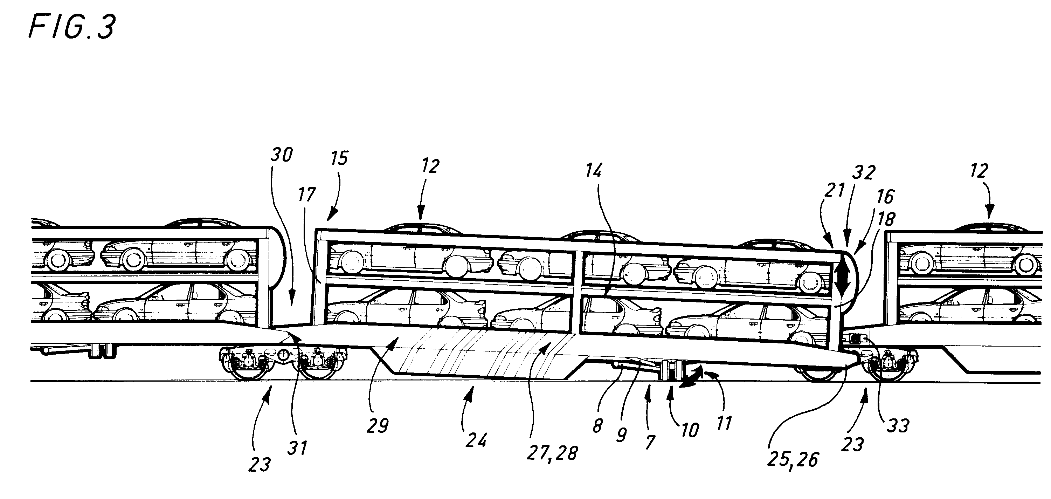

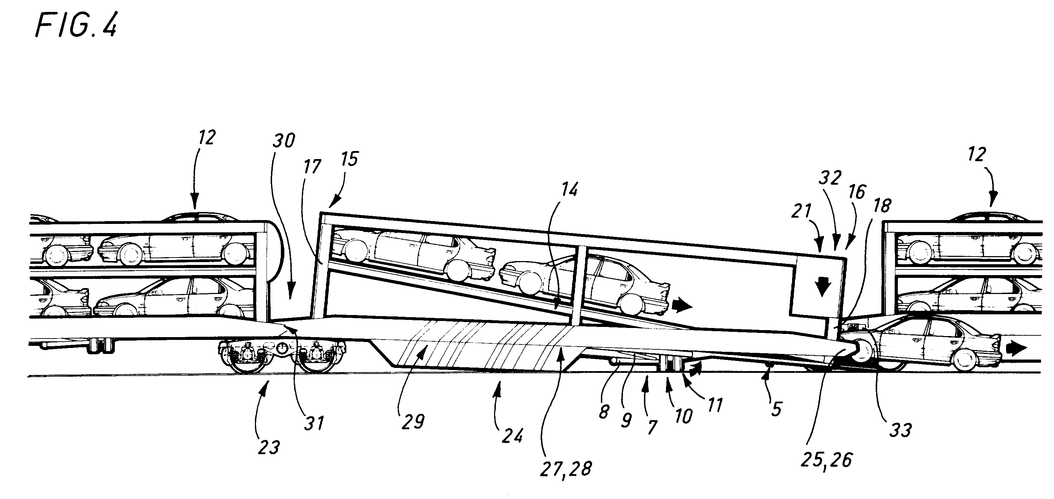

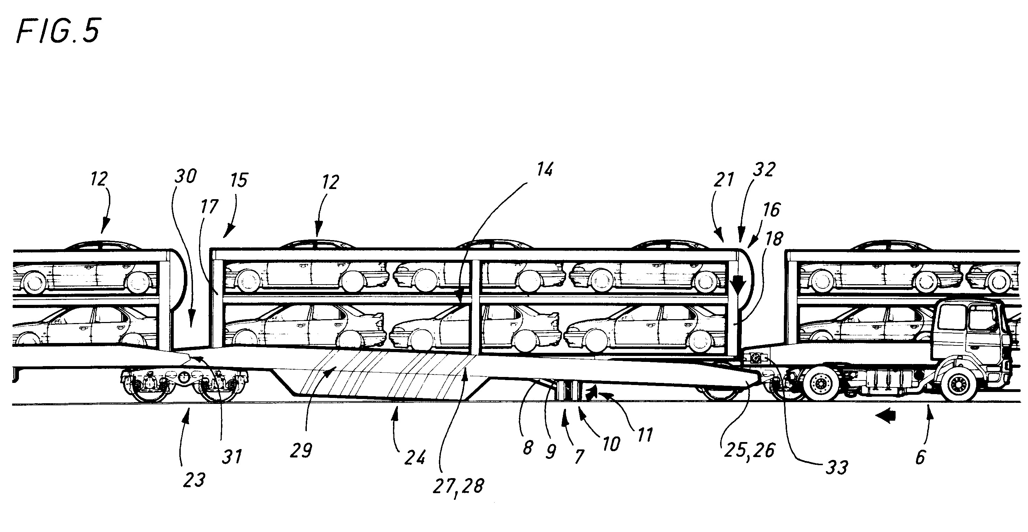

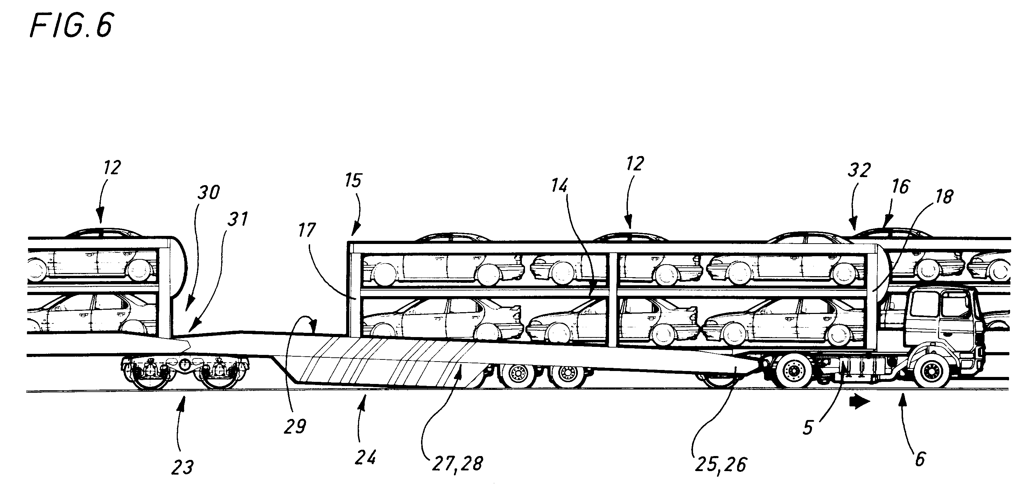

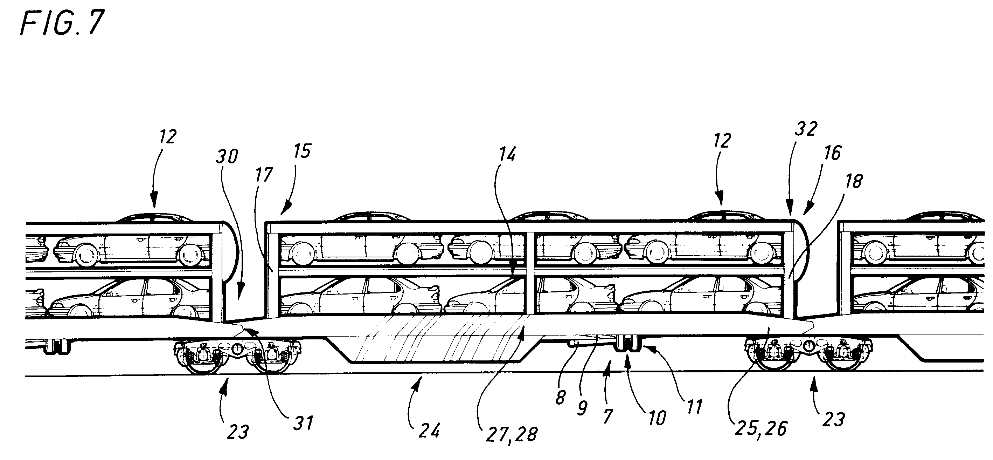

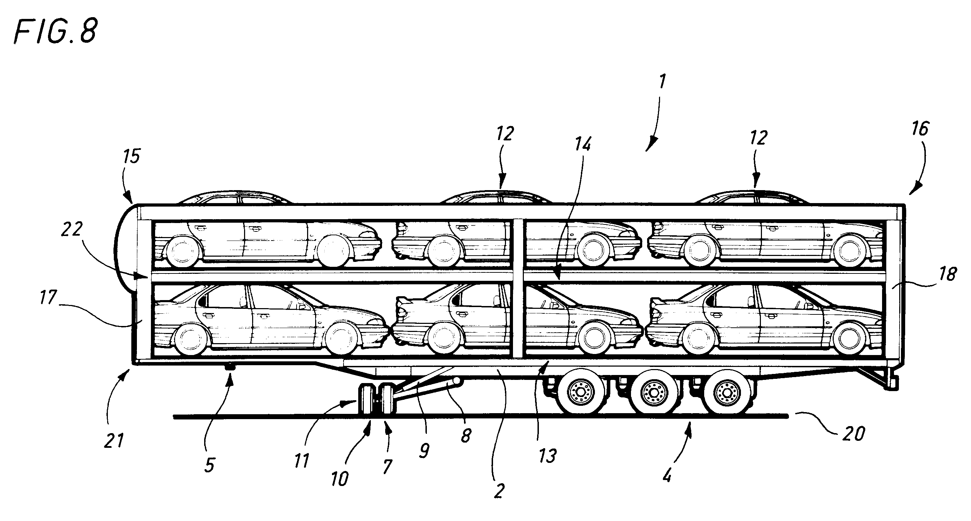

Les caractéristiques techniques et d'autres avantages de l'invention sont consignés dans la description qui suit, effectuée à titre d'exemple non limitatif sur un mode d'exécution en référence aux dessins accompagnants dans lesquels :
. les figures 1 à 7 sont des vues de profil et en plan illustratives des phases de chargement/déchargement dans l'exemple d'application d'une semi-remorque au transport ferroviaire rail-route pour lequel elle constitue la charge, figures dont détail ci-après :
   - figure 1 : alignement ou désalignement de la structure-wagon ;
   - figure 2 : engagement ou désengagement du bogie ;
   - figure 3 : pose inclinée au sol ou relevage à partir du sol ;
   - figure 4 : déchargement individuel des voitures ;
   - figures 5 et 6 : enlèvement de la semi-remorque par un tracteur ;
   - figure 7 : semi-remorque en place train constitué ;
. la figure 8 est une vue de profil d'un exemple de semi-remorque porte-voitures équipée d'un moyen de soutien et de levage.

Le procédé selon l'invention entre dans le cadre général du transport rail-route.

Il se rapporte de façon plus particulière mais non limitative au procédé de manoeuvre de la structure-wagon tel que décrit dans les brevets antérieurs du déposant pour son incorporation dans le convoi ferroviaire, sa libération et sa mise en position de chargement ou de déchargement.

L'idée générale inventive porte de façon générale sur un procédé d'intégration d'une structure ferroviaire chargée dans un convoi ferroviaire et sa libération de ce convoi caractérisé en ce que l'on utilise un moyen de soutien et de levage de la charge inhérent à celle-ci et des moyens de liaison mécanique temporaire entre la charge et la structure ferroviaire en tant que moyens actifs pour les opérations liées aux mouvement de la structure ferroviaire par rapport au convoi lors des phases de chargement/déchargement de celle-ci.

En le considérant expressément comme strictement non limitatif, on peut utiliser l'exemple illustratif du cas d'une semi-remorque portant un chargement de voitures comme celles représentées sur les dessins.

Il s'agit d'une semi-remorque 1 qui présente classiquement, un châssis 2, un train de roues multi-essieux 4 supportant le châssis 2 et un moyen d'accouplement du type cheville ouvrière 5 coopérant avec la sellette installée sur un véhicule à moteur de type tracteur 6.

Selon une caractéristique de ce procédé, la charge comporte un moyen de soutien et de levage 7 et éventuellement de roulage ou des fonctions identiques scindées entre elles ou regroupées, ainsi qu'une liaison mécanique temporaire entre la semi-remorque et le corps de la structure-wagon.

La semi-remorque 1 choisie comme exemple comportera par exemple en sous-face de son châssis et vers l'avant, par exemple à l'emplacement approximatif des béquilles traditionnelles de soutien, un moyen de support et de levage 7 actionné électriquement ou hydrauliquement et commandé à distance.

Ce moyen 7 associe ou regroupe les fonctions de soutien et de relevage et éventuellement de roulage avec comme contrainte supplémentaire de pouvoir s'abaisser suffisamment jusqu'à ce que l'extrémité avant de la semi-remorque arrive en contact avec le sol.

Ce moyen de soutien et de levage peut prendre différentes formes techniques. Il peut s'agir d'abord de béquilles télescopiques ou d'un bras pivotant 8 actionné par un moyen mécanique ou de façon plus complète d'un véritable train roulant relevable sous l'effet d'un vérin 9 de manoeuvre.

Ce moyen est représenté sur les figures. Il est alimenté en énergie par un bloc d'interface qui peut recevoir à raccordement rapide soit la liaison classique en énergie avec le tracteur soit une liaison vers une autre source extérieure présente habituellement sur les terminaux ou les aires portuaires ou les dépôts.

Le moyen d'actionnement du bras 8 peut être alimenté de façon autonome, c'est-à-dire à partir d'une source d'énergie embarquée à bord de la semi-remorque.

Ce bras 8 est équipé à son extrémité libre d'une plaque d'appui ou éventuellement d'un ensemble de roulage 10 sous la forme de deux roues jumelées portées par un arbre de roue 11 et de préférence motorisé. Son autre extrémité est articulée de façon pivotante au châssis 2 de la semi-remorque.

Ce moyen de roulement est à direction fixe transversale ou à orientation variable. Il est par exemple motorisé pour parfaire le caractère autonome des manoeuvres.

La semi-remorque 1 représentée à titre d'exemple portant des voitures 12 est équipée d'un plan de chargement inférieur 13 et d'un plateau de chargement supérieur 14 mobile verticalement le long de portiques 15 et 16 sous la forme par exemple de poteaux d'angle 17 et 18 en regard, par l'action de dispositifs de levage prévus dans ces poteaux, non visibles sur les figures.

La semi-remorque reposant sur le sol 20 présente une extrémité avant 21.

Les dispositifs de déplacement du plateau supérieur 14 à extrémité avant 22 permettent le chargement et le déchargement des voitures 12.

Conformément au présent procédé, la charge comporte le moyen actif pour les opérations d'engagement et de désengagement de la structure ferroviaire sur laquelle elle est placée. Selon l'exemple choisi, ce moyen est le moyen de soutien et de levage 7. Il procure aussi la possibilité de chargement et de déchargement des véhicules alors que la semi-remorque est déjà ou encore en place sur la structure-wagon.

Les manoeuvres de chargement/déchargement décrites ci-après nécessitent des moyens de liaison mécanique, en particulier de support et de fixation temporaire du châssis de la semi-remorque au corps de la structure ferroviaire, de manière à transmettre à cette structure ferroviaire la poussée vers le haut et la descente nécessaires au désengagement puis à l'engagement des extrémités en brancard dans les structures de réception à immobilisation.

Ces moyens de liaison mécanique en particulier de support et de fixation temporaire, non représentés, peuvent prendre différentes formes techniques.

Il peut s'agir de simples consoles effaçables, par exemple par rabattement, lesdites consoles pouvant être équipées de verrous normalisés, par exemple ceux connus dans la normalisation ISO sous verrous tournants.

Il peut s'agir aussi de simples éléments transversaux de liaison mécanique entre les longerons du châssis et les éléments longitudinaux de la structure ferroviaire.

Il peut s'agir encore d'éléments transversaux remplissant les mêmes fonctions.

On décrira plus particulièrement ci-après, avec l'exemple d'un bogie commun 23, les phases relatives à l'association et à la dissociation du convoi d'une structure ferroviaire 24 apte à venir se monter sur des structures de réception du bogie 23 par les extrémités 25,26 de bras parallèles 27,28 en brancard. Elle est du type à fond récepteur plat surbaissé 29 et à extrémité avant de pivotement 30 coopérant avec un pivot 31 de bogie et à extrémité arrière 32 ouverte présentant les deux bras parallèles 27 et 28 à la manière d'un brancard. Les extrémités 25 et 26 de ces bras viennent s'engager dans des structures réceptrices, présentes de part et d'autre du pivot 31 de bogie, et aux extrémités d'une traverse commune d'accouplement 33 portée à pivotement par la crapaudine du bogie commun 23 à deux structures ferroviaires adjacentes.

Pour décrire le chargement, on suppose la structure ferroviaire en position oblique inclinée qui est sa position de chargement, mais aussi de déchargement.

La semi-remorque 1 est amenée en marche arrière par le tracteur 6 jusqu'à son introduction complète dans la structure ferroviaire porteuse.

Lorsque son train de roues arrière 4 est arrivé en position sur le fond plat surbaissé 29, on procède au désaccouplement de la semi-remorque et du tracteur. A cet effet, on actionne le bras pivotant 8 de relevage qui, par appui sur le sol, fait remonter le châssis jusqu'à une hauteur suffisante pour le désaccouplement. On abaisse ensuite le châssis 2 de la semi-remorque jusqu'à permettre la liaison mécanique temporaire entre ledit châssis et la structure ferroviaire. On procède à l'association mécanique puis on actionne le bras pivotant 8 pour faire remonter l'ensemble et permettre le mouvement d'approche et d'engagement des extrémités 25 et 26 du brancard dans les structures réceptrices de la traverse d'accouplement 33 du bogie 23.

A l'aide d'une force motrice, par exemple la force motrice d'entraînement du moyen de roulement des roues jumelées, on réalise le déplacement de rabattement en pivotement qui a pour but d'amener la structure-wagon dans l'alignement du train. Il suffit alors de remonter le bras pivotant 8 pour permettre l'abaissement des extrémités du brancard dans les structures réceptrices de la traverse d'accouplement 33 du bogie 23.

Le déchargement s'effectue de façon rigoureusement inverse. L'ensemble est relevé, désaccouplé et dévié en oblique.

Après mise en position d'accouplement du tracteur 6 et de la semi-remorque 1, celle-ci est désolidarisée de la structure-wagon et accouplée au tracteur 6 par sa sellette.

Dans le cas d'une dissociation du convoi par mouvement longitudinal seul, la fonction de soutien et de levage du moyen 7 prévu sur la semi-remorque est nécessaire. En effet, il suffit, par un mouvement vertical, d'engager ou de dégager les extrémités 25 et 26 du brancard de la traverse d'accouplement 33 portée par le bogie 23. Pour l'introduction dans la structure ferroviaire ou sa sortie, la semi-remorque 1 se déplace en ligne droite sur son train de roues 4 attelée au tracteur.

## Revendications

1. Procédé d'engagement dans un convoi ferroviaire et de dégagement du convoi ferroviaire d'une structure ferroviaire porteuse d'une charge équipée de moyens de soutien et de levage, caractérisé en ce que l'on utilise les moyens de soutien et de levage de ladite charge en coopération avec des moyens de liaison mécanique temporaire entre ladite charge et la structure ferroviaire en tant que moyens actifs pour les opérations d'engagement ou de dégagement de la structure ferroviaire par rapport au convoi.

2. Procédé selon la revendication 1 caractérisé en ce que la charge est une semi-remorque.

3. Procédé selon la revendication 2 caractérisé en ce que la charge est une semi-remorque (1) porte-véhicules (12).

4. Procédé selon l'une quelconque des revendications précédentes caractérisé en ce que le moyen de soutien et de levage (7) est un bras pivotant (8) d'inclinaison articulé par une de ses extrémités sous le châssis de la semi-remorque.

5. Procédé selon la revendication précédente caractérisé en ce que le moyen de soutien et de levage porte à son extrémité libre un moyen de roulement (10) en contact avec le sol.

6. Procédé selon la revendication précédente caractérisé en ce que le moyen de roulement en contact avec le sol est un ensemble de deux roues jumelées.

7. Procédé selon la revendication précédente caractérisé en ce que l'ensemble des deux roues jumelées est motorisé.

8. Procédé selon l'une quelconque des revendications précédentes caractérisé en ce que le moyen de soutien et de levage permet l'inclinaison de la semi-remorque (1) jusqu'au contact d'une extrémité avec le sol.

9. Procédé selon l'une quelconque des revendications précédentes caractérisé en ce que le moyen de liaison mécanique temporaire est un ensemble de consoles effaçables.

10. Procédé selon l'une quelconque des revendications précédentes caractérisé en ce que le moyen de liaison est un ensemble d'éléments transversaux entre les structures de la charge et celles du wagon.

11. Procédé selon l'une quelconque des revendications précédentes caractérisé en ce que l'on utilise le moyen de roulement (10) du moyen de soutien et de levage pour déplacer en pivotement de rabattement la structure porteuse chargée.
